(19) **Europäisches Patentamt** / **European Patent Office** / **Office européen des brevets**

(11) **EP 4 030 348 A1**

(12) **EUROPEAN PATENT APPLICATION**
published in accordance with Art. 153(4) EPC

(43) Date of publication:
**20.07.2022 Bulletin 2022/29**

(21) Application number: **20869339.0**

(22) Date of filing: **09.07.2020**

(51) International Patent Classification (IPC):
***G06N 3/04*** (2006.01)

(52) Cooperative Patent Classification (CPC):
**G06N 3/04; G06N 3/08**

(86) International application number:
**PCT/CN2020/101009**

(87) International publication number:
**WO 2021/057186 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2019 CN 201910904970**

(71) Applicant: **HUAWEI TECHNOLOGIES CO., LTD.**
**Shenzhen, Guangdong 518129 (CN)**

(72) Inventors:
• **ZHANG, Xinyu**
  **Shenzhen, Guangdong 518129 (CN)**
• **YUAN, Peng**
  **Shenzhen, Guangdong 518129 (CN)**
• **ZHONG, Zhao**
  **Shenzhen, Guangdong 518129 (CN)**

(74) Representative: **Goddar, Heinz J. et al**
**Boehmert & Boehmert**
**Anwaltspartnerschaft mbB**
**Pettenkoferstrasse 22**
**80336 München (DE)**

(54) **NEURAL NETWORK TRAINING METHOD, DATA PROCESSING METHOD, AND RELATED APPARATUSES**

(57) Technical solutions in this application are applied to the field of artificial intelligence. This application provides a neural network training method, a method for performing data processing by using a neural network trained by using the method, and a related apparatus. According to the training method in this application, a target neural network is trained in an adversarial manner, so that a policy search module can continuously discover a weakness of the target neural network, generate a policy of higher quality according to the weakness, and perform data augmentation according to the policy to obtain data of higher quality. A target neural network of higher quality can be trained according to the data. In the data processing method in this application, data processing is performed by using the foregoing target neural network, so that a more accurate processing result can be obtained.

S610: Generate an $i^{th}$ batch of policies according to an $(i-1)^{th}$ group of loss values, where the $(i-1)^{th}$ group of loss values are values output by a loss function after a target neural network is trained according to an $(i-1)^{th}$ batch of augmentation training sets, i is sequentially taken from 2 to N, and N is a preset value

S620: Perform data augmentation on an original training set of the target neural network according to the $i^{th}$ batch of policies, to obtain an $i^{th}$ batch of augmentation training sets

S630: Train the target neural network according to the $i^{th}$ batch of augmentation training sets, to obtain an $i^{th}$ group of loss values

FIG. 6

**Description**

This application claims priority to Chinese Patent Application No. 201910904970.7, filed with the China Patent Office on September 24, 2019 and entitled "NEURAL NETWORK TRAINING METHOD, DATA PROCESSING METHOD, AND RELATED APPARATUS", which is incorporated herein by reference in its entirety.

**TECHNICAL FIELD**

This application relates to the field of artificial intelligence, and more specifically, to a neural network training method, a data processing method, and a related apparatus.

**BACKGROUND**

Artificial intelligence (artificial intelligence, AI) is a theory, a method, a technology, and an application system for simulating, extending, and expanding human intelligence by using a digital computer or a machine controlled by the digital computer, sensing the environment, obtaining knowledge, and using the knowledge to obtain a best result. In other words, artificial intelligence is a branch of computer science, and is intended to understand essence of intelligence and produce a new intelligent machine that can react in a manner similar to human intelligence. Artificial intelligence is to study design principles and implementation methods of various intelligent machines, to enable the machines to have perception, inference, and decision-making functions. Researches in the field of artificial intelligence include robots, natural language processing, computer vision, decision-making and inference, human-machine interaction, recommendation and search, AI basic theories, and the like.

With rapid development of artificial intelligence technologies, a neural network such as a deep neural network has scored great achievements in processing and analyzing a plurality of media signals such as an image, a video, and voice. A good neural network usually needs a large amount of training data to get an ideal result. When an amount of data is limited, data augmentation (data augmentation) can be used to increase diversity of training samples, improve robustness of a network model, and avoid overfitting.

Data augmentation is transformation of existing data, such as flipping, translation, or rotation, to create more data.

Currently, data augmentation includes offline augmentation and online augmentation. Offline augmentation is to directly process data sets. An amount of data is equal to a product of an augmentation factor and a quantity of original data sets. This method is often used in scenarios in which a quantity of data sets is very small. Online augmentation is also referred to as dynamic augmentation, and is mainly applied to large-scale data sets. Online augmentation is to make corresponding changes to a small batch of data to be input into a model, to obtain more data.

In an existing data augmentation technology, a data augmentation method is proposed. In the data augmentation method, a search space is designed. The search space includes one or more policies, each policy includes a plurality of sub-policies, and each sub-policy includes two operations. Each operation is an image processing function similar to translation, rotation, or clipping, and each operation has two hyperparameters. One hyperparameter is a probability of applying the operation, and the other hyperparameter is a magnitude (magnitude) of applying the operation. In the data augmentation method, a search algorithm is used to search the search space for a better policy, so that a neural network trained based on these better measurements can have higher verification accuracy.

More specifically, the search space includes 16 operations: x-coordinate clipping (ShearX), y-coordinate clipping (ShearY), x-coordinate flipping (TranslateX), y-coordinate flipping (Translate Y), rotation, automatic contrast, inversion, equalization, exposure, stratification, contrast, color, brightness, definition, cutout, and sample pairing. A magnitude of each operation is discretized into 10 discrete values (with a uniform spacing), and a probability of each operation is discretized into 11 values (which are uniformly distributed). Therefore, searching for each sub-policy is searching $(16 \times 10 \times 11)^2$ combinations for a possible combination. Because one policy includes five sub-policies, searching the search space for a policy is searching $(16 \times 10 \times 11)^{10}$ combinations (that is, $(16 \times 10 \times 11)^{10}$ policies) for a possible combination.

A policy search algorithm includes a controller of a recurrent neural network and a training algorithm of an approximate policy optimization algorithm. The controller performs sampling on the foregoing $(16 \times 10 \times 11)^{10}$ policies, performs data augmentation on a sub-training set by using an augmentation policy obtained through sampling, and trains a sub-model by using data obtained through data augmentation to obtain a feedback signal. After the feedback signal is fed back to the controller, the controller performs policy sampling based on the feedback signal. The foregoing procedure is repeated until the algorithm converges or a termination condition is met. After the search ends, five policies with best performance are selected from all policies obtained through sampling to constitute a group of policies including 25 sub-policies, and then the group of policies including 25 sub-policies are used to augment training data of a target model, to train the target model based on the augmented training data.

In the foregoing method, sampling needs to be performed for more than 15,000 times to obtain a better policy. That is, policy sampling efficiency of the foregoing policy search algorithm is relatively low. Because the training data of the target model is obtained through sampling according to the foregoing policy search algorithm, relatively low sampling efficiency of the foregoing policy search algorithm causes relatively low training efficiency of the target model.

## SUMMARY

This application provides a neural network training method, a neural network-based data processing method, and a related apparatus, to help improve training efficiency and improve performance of the neural network.

According to a first aspect, this application provides a neural network training method. The method includes: generating an $i^{th}$ batch of policies according to an $(i-1)^{th}$ group of loss values, where the $(i-1)^{th}$ group of loss values are values output by a loss function after a target neural network is trained according to an $(i-1)^{th}$ batch of augmentation training sets, i is sequentially taken from 2 to N, and N is a preset positive integer; performing data augmentation on an original training set of the target neural network according to the $i^{th}$ batch of policies, to obtain an $i^{th}$ batch of augmentation training sets; training the target neural network according to the $i^{th}$ batch of augmentation training sets, to obtain an $i^{th}$ group of loss values; and outputting a neural network obtained by training the target neural network according to an $N^{th}$ batch of augmentation training sets.

According to the method in the embodiments of this application, the target neural network and a search policy are alternately trained, so that the generated policy can change with a status of the target neural network, and an augmentation training set obtained according to the policy can better match a training process of the target neural network. This greatly improves performance of the target neural network. In addition, the training apparatus can improve policy generation efficiency, and improve training efficiency of the target neural network.

In addition, the target neural network trained by using the method may be an actual service neural network, that is, policy search and service neural network training may be alternately completed synchronously. This helps improve training efficiency and improve performance of the service neural network.

Generally, the $i^{th}$ batch of policies need to meet the following requirement: A loss function value output by performing inference on the $i^{th}$ batch of augmentation training sets according to the target neural network after the $i^{th}$ batch of augmentation training sets obtained by augmenting the original training set according to the $i^{th}$ batch of policies are input into the target neural network needs to be greater than a loss function value output by performing inference on the $(i-1)^{th}$ batch of augmentation training sets according to the target neural network after the $(i-1)^{th}$ batch of augmentation training sets are input to the target neural network. After the $i^{th}$ batch of augmentation training sets obtained through augmentation according to the $i^{th}$ batch of policies are used to train the target neural network, a loss value of the target neural network needs to be reduced.

That is, according to the method, the target neural network is trained in an adversarial manner, so that a weakness of the target neural network can be continuously discovered, a policy of higher quality can be generated according to the weakness, and data augmentation can be performed according to the policy to obtain data of higher quality. A target neural network of higher quality can be trained according to the data.

With reference to the first aspect, in a first possible implementation, the generating an $i^{th}$ batch of policies according to an $(i-1)^{th}$ group of loss values includes: generating the $i^{th}$ batch of policies according to an augmentation policy neural network and the $(i-1)^{th}$ group of loss values, where the $(i-1)^{th}$ group of loss values are used to indicate the augmentation policy neural network to update a parameter according to a machine learning method, and the augmentation policy neural network includes a long short-term memory unit, a normalization module, and a sampling module. The long short-term memory unit is configured to map operation information output by the sampling module in a previous time step to an M-dimensional vector, where M is a length of an information set to which operation information output by the sampling module in a current time step belongs. The normalization module is configured to generate probability distribution of M pieces of operation information in the information set according to the M-dimensional vector output by the long short-term memory unit, where the information set is an operation type set, an operation probability set, or an operation magnitude set. The sampling module is configured to output one of the M pieces of operation information through sampling according to the probability distribution.

With reference to the first possible implementation, in a second possible implementation, the sampling module outputs a one-hot vector of the operation information in the previous time step. The augmentation policy neural network further includes a word vector embedding module, and the word vector embedding module is configured to map, to a vector in a real number field, the one-hot vector of the operation information output by the sampling module in the previous time step. The long short-term memory unit is specifically configured to map, to the M-dimensional vector, the vector output by the word vector embedding module.

With reference to the first aspect, in a third possible implementation, the method further includes: performing inference on the original training set by using the target neural network trained according to the $(i-1)^{th}$ batch of augmentation training sets, to obtain an $i^{th}$ batch of features of data in the original training set in the target neural network. The generating an $i^{th}$ batch of policies according to an $(i-1)^{th}$ group of loss values includes: generating the $i^{th}$ batch of policies according to the $(i-1)^{th}$ group of loss values and the $i^{th}$ batch of features.

With reference to the third possible implementation, in a fourth possible implementation, the generating the $i^{th}$ batch of policies according to the $(i-1)^{th}$ group of loss values and the $i^{th}$ batch of features includes: generating the $i^{th}$ batch of policies according to an augmentation policy neural network and the $(i-1)^{th}$ group of loss values, where the $(i-1)^{th}$ group of loss values are used to indicate the augmentation policy neural network to update a parameter according to a machine learning method, and the augmentation policy neural network includes a long short-term memory unit, a normalization module, and a sampling module. The long short-term memory unit is configured to map operation information output by the sampling module in a previous time step to an M-dimensional vector, where M is a length of an information set to which operation information output by the sampling module in a current time step belongs. The normalization module is configured to generate probability distribution of M pieces of operation information in the information set according to the M-dimensional vector output by the long short-term memory unit, where the information set is an operation type set, an operation probability set, or an operation magnitude set. The sampling module is configured to output one of the M pieces of operation information through sampling according to the probability distribution.

With reference to the fourth possible implementation, in a fifth possible implementation, the sampling module outputs a one-hot vector of the operation information in the previous time step. The augmentation policy neural network further includes a word vector embedding module, and the word vector embedding module is configured to map, to a vector in a real number field, the one-hot vector of the operation information output by the sampling module in the previous time step. The long short-term memory unit is specifically configured to map, to the M-dimensional vector, the vector output by the word vector embedding module.

According to a second aspect, this application provides a data processing method, including: obtaining to-be-processed data; and processing the to-be-processed data according to a target neural network. The target neural network is obtained through N times of training. During $i^{th}$ training of the N times of training, the target neural network is trained by using an $i^{th}$ batch of augmentation training sets. The $i^{th}$ batch of augmentation training sets are training sets obtained by augmenting an original training set according to an $i^{th}$ batch of policies. The $i^{th}$ batch of policies are policies generated according to an $(i-1)^{th}$ group of loss values. The $(i-1)^{th}$ group of loss values are values output by a loss function of the target neural network when the target neural network is trained according to an $(i-1)^{th}$ batch of augmentation training sets, and N is a preset positive integer.

According to the method, data may be processed according to the trained target neural network in the method in the first aspect, so that processing performance can be improved. For example, when the target neural network is an image classification network, performance of the trained target neural network in the method in the first aspect is higher. Therefore, a result of performing image classification according to the target neural network is more accurate.

With reference to the second aspect, in a first possible implementation, the $i^{th}$ batch of policies are generated according to an augmentation policy neural network and the $(i-1)^{th}$ group of loss values, where the $(i-1)^{th}$ group of loss values are used to indicate the augmentation policy neural network to update a parameter according to a machine learning method, and the augmentation policy neural network includes a long short-term memory unit, a normalization module, and a sampling module. The long short-term memory unit is configured to map operation information output by the sampling module in a previous time step to an M-dimensional vector, where M is a length of an information set to which operation information output by the sampling module in a current time step belongs. The normalization module is configured to generate probability distribution of M pieces of operation information in the information set according to the M-dimensional vector output by the long short-term memory unit, where the information set is an operation type set, an operation probability set, or an operation magnitude set. The sampling module is configured to output one of the M pieces of operation information through sampling according to the probability distribution.

With reference to the first possible implementation, in a second possible implementation, the sampling module outputs a one-hot vector of the operation information in the previous time step. The augmentation policy neural network further includes a word vector embedding module, and the word vector embedding module is configured to map, to a vector in a real number field, the one-hot vector of the operation information output by the sampling module in the previous time step. The long short-term memory unit is specifically configured to map, to the M-dimensional vector, the vector output by the word vector embedding module.

With reference to the second aspect, in a third possible implementation, the $i^{th}$ batch of policies are generated according to the $(i-1)^{th}$ group of loss values and the $i^{th}$ batch of features, and the $i^{th}$ batch of features are obtained by performing inference on the original training set by using the target neural network trained according to the $(i-1)^{th}$ batch of augmentation training sets.

With reference to the third possible implementation, in a fourth possible implementation, the $i^{th}$ batch of policies are generated according to an augmentation policy neural network, the $i^{th}$ batch of features, and the $(i-1)^{th}$ group of loss values, where the $(i-1)^{th}$ group of loss values and the $i^{th}$ batch of features are used to indicate the augmentation policy neural network to update a parameter according to a machine learning method, and the augmentation policy neural network includes a long short-term memory unit, a normalization module, a sampling module, and a splicing module.

The splicing module is configured to splice, into a vector, the $i^{th}$ batch of features and operation information output by the sampling module in a previous time step. The long short-term memory unit is configured to obtain an M-dimensional vector through mapping according to the vector output by the splicing module, where M is a length of an information set to which operation information output by the sampling module in a current time step belongs. The normalization module is configured to generate probability distribution of M pieces of operation information in the information set according to the M-dimensional vector output by the long short-term memory unit, where the information set is an operation type set, an operation probability set, or an operation magnitude set. The sampling module is configured to output one of the M pieces of operation information through sampling according to the probability distribution.

With reference to the fourth possible implementation, in a fifth possible implementation, the sampling module outputs a one-hot vector of the operation information in the previous time step. The augmentation policy neural network further includes a word vector embedding module, and the word vector embedding module is configured to map, to a vector in a real number field, the one-hot vector of the operation information output by the sampling module in the previous time step. The long short-term memory unit is specifically configured to map, to the M-dimensional vector, the vector output by the word vector embedding module.

According to a third aspect, a neural network training apparatus is provided. The apparatus includes a module configured to perform the method in any one of the first aspect or the implementations of the first aspect.

According to a fourth aspect, a data processing apparatus is provided. The apparatus includes a module configured to perform the method in any one of the second aspect or the implementations of the second aspect.

According to a fifth aspect, a neural network training apparatus is provided. The apparatus includes: a memory, configured to store a program; and a processor, configured to execute the program stored in the memory. When the program stored in the memory is executed, the processor is configured to perform the method in any one of the first aspect or the implementations of the first aspect.

According to a sixth aspect, a data processing apparatus is provided. The apparatus includes: a memory, configured to store a program; and a processor, configured to execute the program stored in the memory. When the program stored in the memory is executed, the processor is configured to perform the method in any one of the second aspect or the implementations of the second aspect.

According to a seventh aspect, a computer-readable storage medium is provided. The computer-readable storage medium stores instructions executed by a device, and the instructions are used to implement the methods in any one of the first aspect and the second aspect or the implementations of the first aspect and the second aspect.

According to an eighth aspect, a computer program product including instructions is provided. When the computer program product is run on a computer, the computer is enabled to perform the methods in any one of the first aspect and the second aspect or the implementations of the first aspect and the second aspect.

According to a ninth aspect, a chip is provided. The chip includes a processor and a data interface, and the processor reads, through the data interface, instructions stored in a memory, to perform the methods in any one of the first aspect and the second aspect or the implementations of the first aspect and the second aspect.

Optionally, in an implementation, the chip may further include the memory, and the memory stores the instructions. The processor is configured to execute the instructions stored in the memory, and when the instructions are executed, the processor is configured to perform the methods in any one of the first aspect and the second aspect or the implementations of the first aspect and the second aspect.

## BRIEF DESCRIPTION OF DRAWINGS

FIG. 1 is a schematic diagram of a structure of a system architecture according to an embodiment of this application;
FIG. 2 is a schematic diagram of a structure of a training apparatus according to an embodiment of this application;
FIG. 3 is a schematic diagram of deployment of a training apparatus according to another embodiment of this application;
FIG. 4 is a schematic diagram of deployment of a training apparatus according to another embodiment of this application;
FIG. 5 is a schematic diagram of a structure of a data processing apparatus according to an embodiment of this application;
FIG. 6 is a schematic flowchart of a training method according to an embodiment of this application;
FIG. 7 is a schematic flowchart of a training method according to another embodiment of this application;
FIG. 8 is a schematic diagram of a structure of a policy search neural network according to an embodiment of this application;
FIG. 9 is a schematic flowchart of a training method according to another embodiment of this application;
FIG. 10 is a schematic flowchart of a training method according to another embodiment of this application;

FIG. 11 is a schematic diagram of a structure of a policy search neural network according to another embodiment of this application;

FIG. 12 is a schematic diagram of a structure of a policy search neural network according to another embodiment of this application;

FIG. 13 is a schematic flowchart of a data processing method according to an embodiment of this application;

FIG. 14 is a schematic diagram of a structure of an apparatus according to an embodiment of this application; and

FIG. 15 is a schematic diagram of a structure of a policy search neural network according to another embodiment of this application.

## DESCRIPTION OF EMBODIMENTS

Solutions in this application may be applied to many fields in artificial intelligence, for example, fields such as smart terminals, smart manufacturing, smart transportation, smart home, smart health care, smart security protection, autonomous driving, and safe city. The following briefly describes three common application scenarios.

Application scenario 1: Assisted/Autonomous driving system

A data processing network is trained by using a training method in the embodiments of this application. In an advanced driving assistant system (advanced driving assistant system, ADAS) and an autonomous driving system (autonomous driving system, ADS), the data processing network is applied to process an input road picture, to identify different objects in the road picture. For example, the sensor data processing network is applied to detect and evade a pedestrian or an obstacle on a road, especially to avoid collision with a pedestrian.

Application scenario 2: Safe city/Video surveillance system

A data processing network is trained by using a training method in the embodiments of this application. In a safe city system and a video surveillance system, the data processing network is applied to perform target detection (pedestrian or vehicle detection) in real time, a detection result is marked, and the detection result is input into an analysis unit of the system, to find a suspect, a missing person, and a specific vehicle.

Application scenario 3: Smart terminal (album classification, image recognition, and the like)

An album classification neural network is trained by using a training method in the embodiments of this application, and then the album classification neural network is used to classify pictures on a smart terminal (for example, a smartphone or a tablet computer), to label pictures of different categories, thereby facilitating view and search by a user. In addition, classification labels of the pictures may also be provided for an album management system to perform classification management. This saves management time of the user, improves album management efficiency, and improves user experience.

Embodiments of this application relate to a neural network-related application. To better understand the solutions in the embodiments of this application, the following first describes related terms and related concepts that may be used in the embodiments of this application.

(1) Neural network

The neural network may include a neural unit. The neural unit may be an operation unit that uses $x_s$ and an intercept 1 as an input, and an output of the operation unit may be shown in formula (1-1):

$$h_{W,b}\left(x\right) = f\left(W^T x\right) = f(\sum_{s=1}^{n} W_s x_s + b) \qquad (1\text{-}1)$$

Herein, s = 1, 2, ..., and n, n is a natural number greater than 1, $W_s$ represents a weight of $x_s$, b represents an offset of the neuron, and f represents an activation function (activation functions) of the neuron, where the activation function is used to introduce a nonlinear characteristic into the neural network, to convert an input signal in the neuron into an output signal. The output signal of the activation function may be used as an input of a next convolutional layer, and the activation function may be a sigmoid function. The neural network is a network constituted by connecting a plurality of single neurons together, that is, an output of one neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having a plurality of hidden layers. The DNN is divided based on locations of different layers. Neural networks inside the DNN may be classified into an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer.

Although the DNN seems complex, it is not really complex for each layer. For brevity, a linear relationship expression is as follows: $\vec{y} = \alpha(W\square\vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha()$ is an activation function. At each layer, the output vector $\vec{y}$ is obtained by performing such a simple operation on the input vector $\vec{X}$. Because there are a large quantity of layers in the DNN, there are also a relatively large quantity of coefficients W and offset vectors $\vec{b}$. Definitions of these parameters in the DNN are as follows: The coefficient $W$ is used as an example. It is assumed that, in a DNN having three layers, a linear coefficient from the fourth neuron at the second layer to the second neuron at the third layer is defined as $W_{24}^{3}$. The superscript 3 represents a quantity of layers at which the coefficient W is located, and the subscript corresponds to an output index 2 at the third layer and an input index 4 at the second layer.

In conclusion, a coefficient from the $k^{th}$ neuron at the $(L-1)^{th}$ layer to the $j^{th}$ neuron at the $L^{th}$ layer is defined as $W_{jk}^{L}$.

It should be noted that the input layer does not have the parameter $W$. In the deep neural network, more hidden layers make the network more capable of describing a complex case in the real world. Theoretically, a model with more parameters has higher complexity and a larger "capacity", and can complete a more complex learning task. Training the deep neural network is a process of learning a weight matrix, and a final objective of the training is to obtain a weight matrix of all layers of the trained deep neural network (a weight matrix including vectors W at many layers).

(3) Classifier

Many neural network structures end up with a classifier, configured to classify objects in an image. The classifier generally includes a fully connected layer (fully connected layer) and a softmax function (which may be referred to as a normalized exponential function, or a normalization function for short), and can output probabilities of different categories based on an input.

(4) Convolutional neural network (Convosutionas Neuras Network, CNN)

The convolutional neural network is a deep neural network having a convolutional structure. The convolutional neural network includes a feature extractor including a convolutional layer and a sub-sampling layer. The feature extractor may be considered as a filter. A convolution process may be considered as a process of using a trainable filter to perform convolution on an input image or a convolutional feature plane (feature map). The convolutional layer is a neuron layer that performs convolution processing on an input signal in the convolutional neural network. In the convolutional layer of the convolutional neural network, one neuron may be connected to only some neurons at a neighboring layer. A convolutional layer generally includes several feature maps, and each feature map may include some neurons arranged in a rectangle. Neurons of a same feature map share a weight, and the shared weight herein is a convolution kernel. Sharing the weight may be understood as that a manner of extracting image information is not related to a location. The underlying principle is that statistical information of a part of an image is the same as that of another part. This means that image information learned in a part can also be used in another part. Therefore, image information obtained through same learning can be used for all locations on the image. At a same convolutional layer, a plurality of convolution kernels may be used to extract different image information. Usually, a larger quantity of convolution kernels indicates richer image information reflected by a convolution operation.

The convolution kernel may be initialized in a form of a matrix of a random size. In a training process of the convolutional neural network, an appropriate weight may be obtained for the convolution kernel through learning. In addition, sharing the weight is advantageous because connections between layers of the convolutional neural network are reduced, and a risk of overfitting is reduced.

(5) Back propagation algorithm

An error back propagation (back propagation, BP) algorithm may be used in a convolutional neural network to modify a value of a parameter in an initial super-resolution model in a training process, so that a reconstruction error loss for the super-resolution model becomes smaller. Specifically, an error loss occurs during forward propagation and output of an input signal. In this case, error loss information is back-propagated to update the parameter in the initial super-resolution model, so that the error loss converges. The back propagation algorithm is an error loss-oriented back propagation process with an objective of obtaining an optimal parameter for the super-resolution model, such as a weight matrix.

(6) Recurrent neural network (recurrent neural networks, RNN)

A purpose of the RNN is to process sequence data. In a conventional neural network model, from an input layer to a hidden layer and then to an output layer, all of the layers are connected, but none of nodes at each layer is connected. However, there are many problems that cannot be resolved by using this common neural network. For example, to predict a next word in a sentence, a previous word usually needs to be used, because adjacent words in the sentence are not independent. A reason why the RNN is referred to as a recurrent neural network is that a current output of a sequence is related to a previous output. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can be used to process sequence data of any length.

Training of the RNN is the same as that of a conventional artificial neural network (artificial neural network, ANN), that is, the BP error back propagation algorithm is used. However, a slight difference lies in that, if network unfolding is performed on the RNN, the parameters W, U, and V are shared. In addition, during use of a gradient descent algorithm, an output in each step depends not only on a network in a current step, but also on a network status in several previous steps. For example, when t = 4, three steps further need to be performed backward, and various gradients need to be added to the three subsequent steps. This learning algorithm is referred to as a time-based back propagation algorithm.

(6) Loss function

In a process of training a deep neural network, because an output of the deep neural network is expected to be as close as possible to a value that is actually expected to be predicted, a predicted value of a current network and a target value that is actually expected may be compared, and then, a weight vector of each layer of neural network is updated based on a difference between the two (certainly, there is usually an initialization process before the first update, that is, a parameter is preconfigured for each layer in the deep neural network). For example, if the predicted value of the network is higher, the weight vector is adjusted to obtain a lower predicted value. The weight vector is continuously adjusted until the deep neural network can predict the target value that is actually expected or a value that is very close to the target value that is actually expected. Therefore, "how to compare a predicted value and a target value" needs to be predefined, which is a function of a loss function (loss function) or an objective function (objective function). The loss function and the objective function are important equations used to measure a difference between a predicted value and a target value. The loss function is used as an example. A higher value (loss) output by the loss function indicates a larger difference. Therefore, training of the deep neural network becomes a process of reducing the loss as much as possible.

(7) Policy

One policy includes one or more sub-policies, and one sub-policy includes one or more operations. One operation is an image processing function similar to translation, rotation, or clipping, and one operation has two hyperparameters. One hyperparameter is a probability of applying the operation, and the other hyperparameter is a magnitude (magnitude) of applying the operation.

The operation in the sub-policy may include any one of the following: x-coordinate clipping, y-coordinate clipping, x-coordinate flipping, y-coordinate flipping, rotation, automatic contrast, inversion, equalization, exposure, stratification, contrast, color, brightness, definition, cutout, sample pairing, and the like.

It may be understood that, when one sub-policy includes a plurality of operations, types of the plurality of operations may be the same.

(8) Data augmentation

Data augmentation is transformation of existing data, such as flipping, translation, or rotation, to create more data.

(9) Neural network model

The neural network model is a mathematical model that imitates a structure and a function of a biological neural network (a central nervous system of an animal). One neural network model may include a plurality of neural network layers with different functions, and each layer includes a parameter and a calculation formula. According to different calculation formulas or different functions, different layers in the neural network model have different names. For example, a layer used to perform convolution calculation is referred to as a convolutional layer, and the convolutional layer is usually used to perform feature extraction on an input signal (for example, an image).

One neural network model may alternatively include a combination of a plurality of existing neural network models. Neural network models of different structures can be used in different scenarios (for example, classification, recognition, or image segmentation) or provide different effects when being used in a same scenario. Neural network models of different structures specifically include one or more of the following: quantities of network layers in the neural network models are different, sequences of network layers are different, and weights, parameters, or calculation formulas at network layers are different.

There are a plurality of different neural network models with relatively high accuracy that are used in application scenarios such as recognition or classification or image segmentation in the industry. Some neural network models may be trained by using a specific training set to complete a task, or may be combined with another neural network model (or another functional module) to complete a task. Some neural network models may alternatively be directly used to complete a task, or may be combined with another neural network model (or another functional module) to complete a task.

In the embodiments of this application, the neural network model is referred to as a neural network for short.

(10) Edge device

The edge device is any device that has computing and network resources between a data generation source and a cloud center. For example, a mobile phone is an edge device between a person and a cloud center, and a gateway is an edge device between a smart home and a cloud center. In an ideal environment, an edge device is a device that analyzes or processes data near a data generation source. Network traffic and response time are reduced due to no data flow.

The edge device in the embodiments of this application may be a mobile phone with a computing capability, a tablet personal computer (tablet personal computer, TPC), a media player, a smart home, a laptop computer (laptop computer, LC), a personal digital assistant (personal digital assistant, PDA), a personal computer (personal computer, PC), a camera, a video camera, a smartwatch, a wearable device (wearable device, WD), an autonomous vehicle, or the like. It may be understood that a specific form of the edge device is not limited in the embodiments of this application.

(11) Inference

Inference is relative to training. After a neural network inputs data, the neural network outputs information such as a loss function value and a feature map without updating a parameter of the neural network.

The following describes the technical solutions in this application with reference to the accompanying drawings.

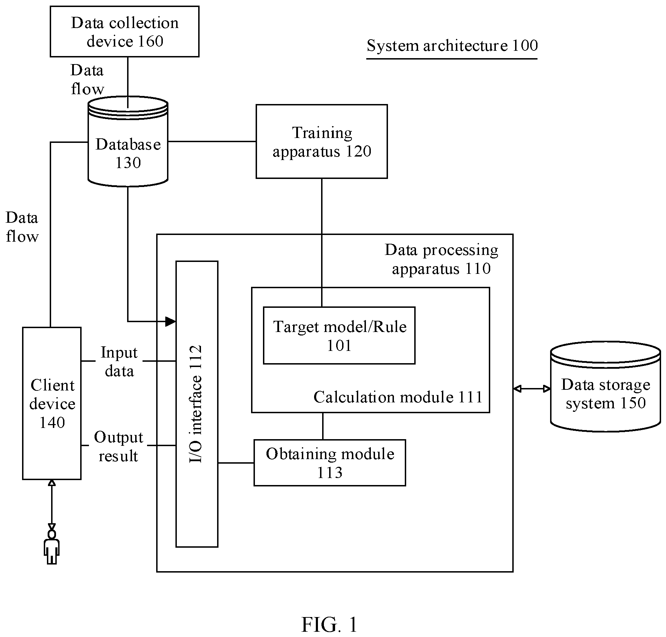

FIG. 1 is a schematic diagram of a system architecture according to an embodiment of this application. As shown in FIG. 1, the system architecture 100 includes a data processing apparatus 110, a training apparatus 120, a database 130, a client device 140, a data storage system 150, and a data collection system 160.

The data collection device 160 is configured to collect training data. For example, the training data may include a training image and annotation data, where the annotation data provides coordinates of a bounding box (bounding box) of a target object in the training image. After collecting the training data, the data collection device 160 stores the training data in the database 130. The training apparatus 120 trains a target model/rule 101 based on the training data maintained in the database 130.

The target model/rule 101 in this embodiment of this application may be specifically a neural network. It should be noted that, in actual application, the training data maintained in the database 130 is not necessarily collected by the data collection device 160, but may be received from another device. It should be further noted that the training apparatus 120 does not necessarily train the target model/rule 101 completely based on the training data maintained in the database 130, but may obtain training data from a cloud or another place to perform model training. The foregoing descriptions should not be construed as a limitation on this embodiment of this application.

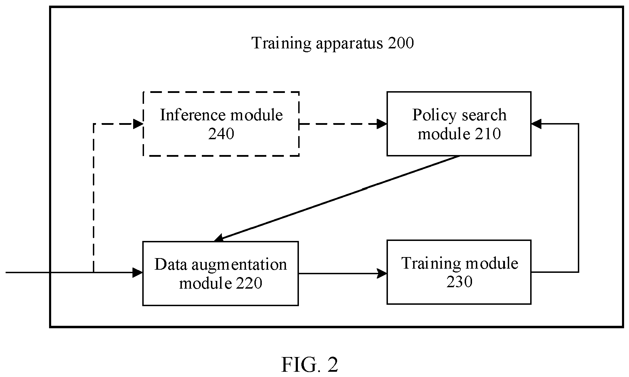

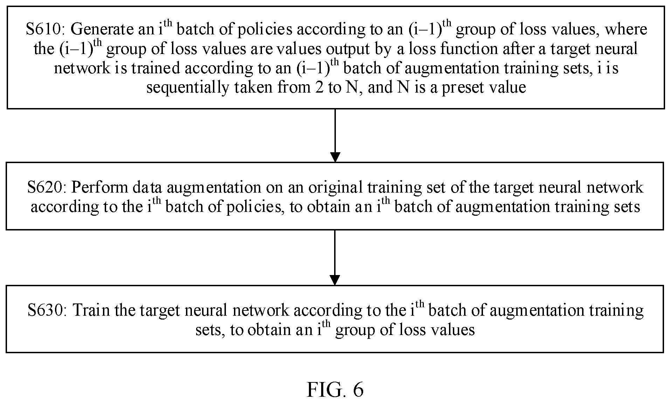

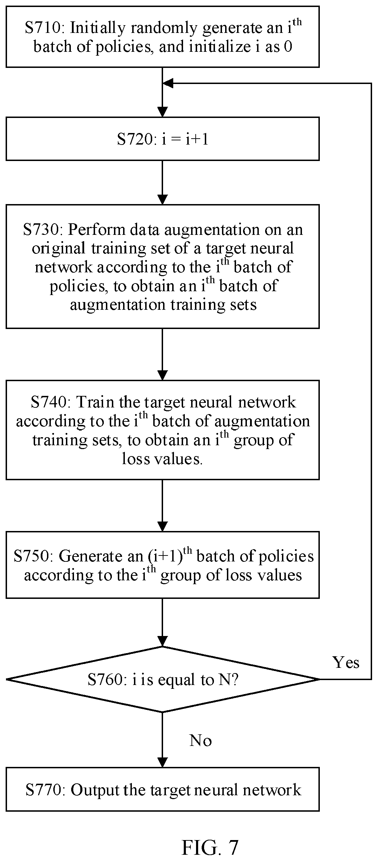

For an example structure of the training apparatus 120, refer to FIG. 2. For an example deployment manner of the training apparatus 120, refer to FIG. 6 or FIG. 7.

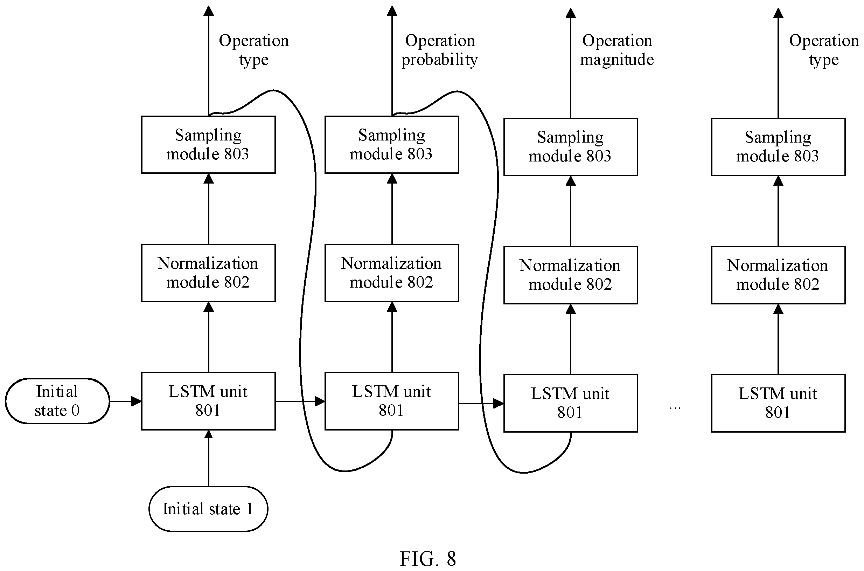

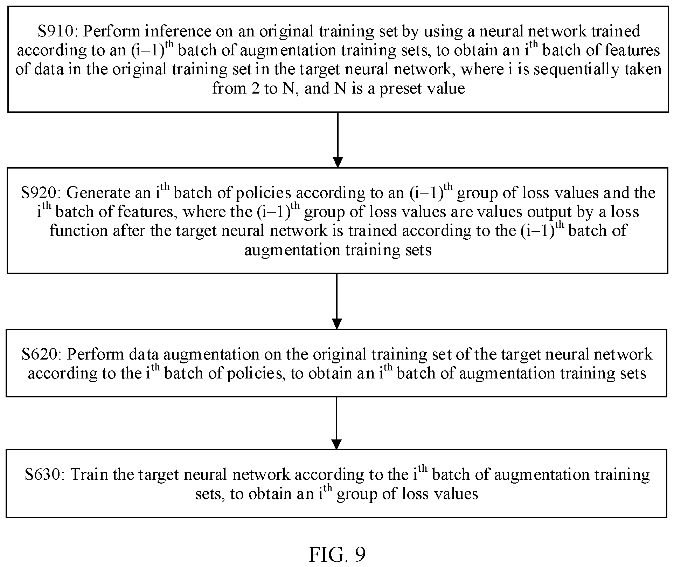

The target model/rule 101 trained by the training apparatus 120 may be applied to different systems or devices, for example, applied to the execution apparatus 110 shown in FIG. 1. For an example structure of the data processing apparatus 110, refer to FIG. 8. For an example deployment manner of the data processing apparatus 110, refer to FIG. 9.

The data processing apparatus 110 may be a terminal, for example, a mobile phone terminal, a tablet computer, a laptop computer, an augmented reality (augmented reality, AR)/virtual reality (virtual reality, VR) device, or an in-vehicle terminal, or a chip that may be applied to the foregoing devices, or may be a server, a cloud, or the like.

In FIG. 1, the data processing apparatus 110 configures an input/output (input/output, I/O) interface 112, and is configured to perform data interaction with an external device, and a user may input data to the I/O interface 112 by using the client device 140. For example, the user may input to-be-processed data, such as a to-be-processed image, by using the client device 140. In addition, the data processing apparatus 110 includes a calculation module 111 and an obtaining module 113, and the calculation module 111 includes the target model/rule 101. The obtaining module 113 is configured to obtain to-be-processed data.

In a process in which the data processing apparatus 110 performs preprocessing on the input data or the calculation module 111 of the data processing apparatus 110 performs related processing such as calculation, the data processing apparatus 110 may invoke data, code, and the like in the data storage system 150 for corresponding processing, or may store data, instructions, and the like obtained through corresponding processing in the data storage system 150.

Finally, the I/O interface 112 presents a processing result, for example, a target detection result obtained through calculation according to the target model/rule 101, to the client device 140, to provide the user with the processing result.

It may be understood that the data processing apparatus 110 and the client equipment in this embodiment of this application may be a same device, for example, a same terminal device.

It should be noted that the training apparatus 120 may generate corresponding target models/rules 101 for different targets or different tasks (or services) based on different training data, and the corresponding target models/rules 101 may be used to implement the foregoing target or complete the foregoing task, to provide the user with a required result.

In FIG. 1, the user may manually provide the input data. The manually providing may be performed by using an interface provided on the I/O interface 112. In another case, the client device 140 may automatically send the input data to the I/O interface 112. If the client device 140 is required to automatically send the input data, the client device 140 needs to be authorized by the user, and the user may set corresponding permission in the client device 140. The user may view, in the client device 140, a result output by the execution apparatus 110. A specific presentation form may be a specific manner such as display, sound, or an action. The client device 140 may alternatively serve as a data collection end to collect, as new sample data, input data that is input into the I/O interface 112 and an output result that is output from the I/O interface 112 in the figure, and store the new sample data in the database 130. Certainly, the client device 140 may alternatively not perform collection, but the I/O interface 112 directly stores, as new sample data in the database 130, input data that is input into the I/O interface 112 and an output result that is output from the I/O interface 112 in the figure.

It may be understood that FIG. 1 is merely a schematic diagram of a system architecture according to an embodiment of this application. A location relationship between a device, a component, a module, and the like shown in the figure constitutes no limitation. For example, in FIG. 1, the data storage system 150 is an external memory relative to the execution apparatus 110. In another case, the data storage system 150 may alternatively be disposed in the execution apparatus 110.

FIG. 2 is a schematic diagram of a structure of a neural network training apparatus 200 according to an embodiment of this application. The training apparatus 200 may include a policy search module 210, a data augmentation module 220, and a training module 230. The policy search module 210 is configured to perform S610 to implement a corresponding function. The data augmentation module is configured to perform S620 to implement a corresponding function. The training module 230 is configured to perform S630 to implement a corresponding function.

Optionally, the training apparatus 200 may further include an inference module 240, and the inference module 240 is configured to perform S840 to implement a corresponding function.

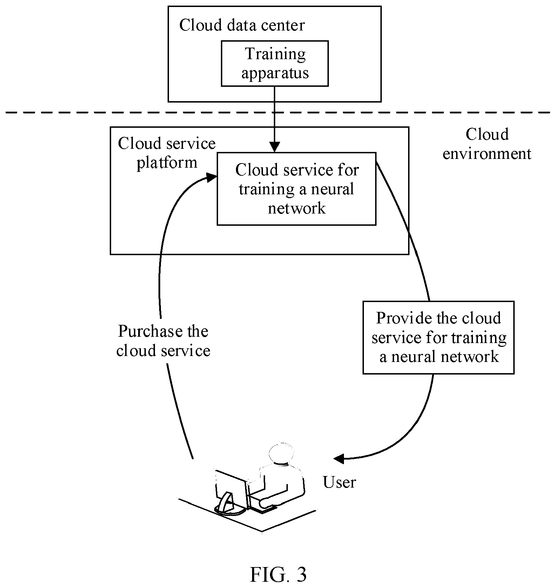

FIG. 3 is a schematic diagram of deployment of a training apparatus according to an embodiment of this application. The training apparatus may be deployed in a cloud environment, and the cloud environment is an entity that provides a cloud service for a user by using a basic resource in a cloud computing mode. The cloud environment includes a cloud data center and a cloud service platform. The cloud data center includes a large quantity of basic resources (including a computing resource, a storage resource, and a network resource) owned by a cloud service provider. The computing resources included in the cloud data center may be a large quantity of computing devices (for example, servers). The training apparatus may be a server that is in the cloud data center and that is configured to train a target neural network. Alternatively, the training apparatus may be a virtual machine that is created in the cloud data center and that is configured to train a target neural network. Alternatively, the training apparatus may be a software apparatus deployed on a server or a virtual machine in the cloud data center. The software apparatus is configured to train a target neural network. The software apparatus may be deployed on a plurality of servers, or a plurality of virtual machines, or a virtual machine and a server in a distributed manner. For example, the policy search module 210, the data augmentation module 220, the training module 230, and the inference module 240 in the training apparatus 200 may be deployed on a plurality of servers, or a plurality of virtual machines, or a virtual machine and a server in a distributed manner. For another example, when the data augmentation module 220 includes a plurality of submodules, the plurality of submodules may be deployed on a plurality of servers, or a plurality of virtual machines, or a virtual machine and a server in a distributed manner.

As shown in FIG. 3, the training apparatus may be abstracted by the cloud service provider as a cloud service for training a neural network on the cloud service platform and then provided for the user. After the user purchases the cloud service on the cloud service platform, the cloud environment provides the cloud service for training a neural network for the user by using the cloud service. The user may upload a to-be-trained target neural network (or an original training set) to the cloud environment through an application programing interface (application program interface, API) or a web page interface provided by the cloud service platform. The training apparatus receives the to-be-trained target neural network and the original training set, generates a policy, performs data augmentation on the original training set by using the policy, trains the to-be-trained target neural network by using an augmented data set, and generates a policy based on trained feedback information. The foregoing steps are repeatedly performed until a training condition is met. The final trained target neural network is returned by the training apparatus to an edge device in which the user is located.

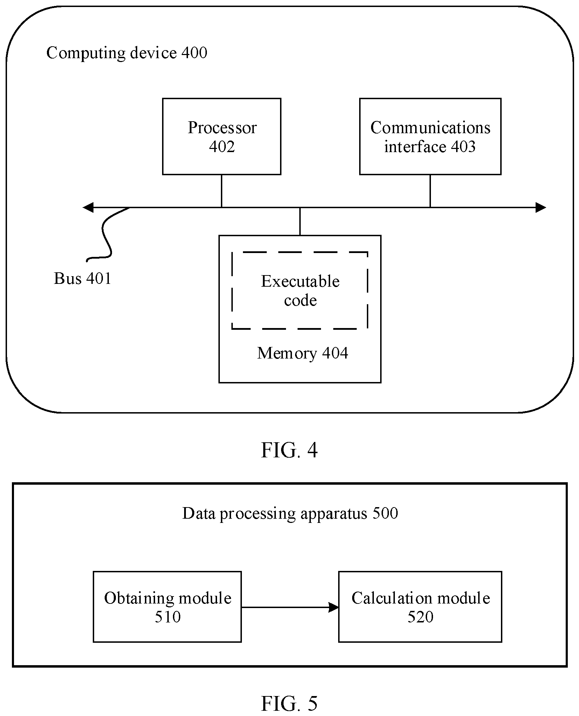

When the training apparatus is a software apparatus, the training apparatus may also be independently deployed on a computing device in any environment, for example, independently deployed on a computing device or independently deployed on a computing device in a data center. As shown in FIG. 4, the computing device 400 includes a bus 401, a processor 402, a communications interface 403, and a memory 404.

The processor 402, the memory 404, and the communications interface 403 communicate with each other through the bus 401. The processor 402 may be a central processing unit (central processing unit, CPU). The memory 404 may include a volatile memory (volatile memory), for example, a random access memory (random access memory, RAM). The memory 704 may further include a non-volatile memory (2non-volatile memory, 2NVM), for example, a read-only memory (2read-only memory, 2ROM), a flash memory, a hard disk drive (hard disk drive, HDD), or a solid-state drive (solid state disk, SSD). The memory 404 stores executable code included in the training apparatus, and the processor 402 reads the executable code in the memory 404 to perform the training method. The memory 404 may further include another software module, for example, an operating system, for running a process. The operating system may be LINUX™, UNIX™, WINDOWS™, or the like.

For example, the communications interface 403 receives an original training set and a target neural network, the memory 404 stores executable code for implementing a function of each module in the training apparatus 200, and the processor 402 reads the executable code to implement the function of each module, and finally implement training of the target neural network.

FIG. 5 is a schematic diagram of a structure of a data processing apparatus 500 according to an embodiment of this application. The data processing apparatus 500 may include an obtaining module 510 and a calculation module 520.

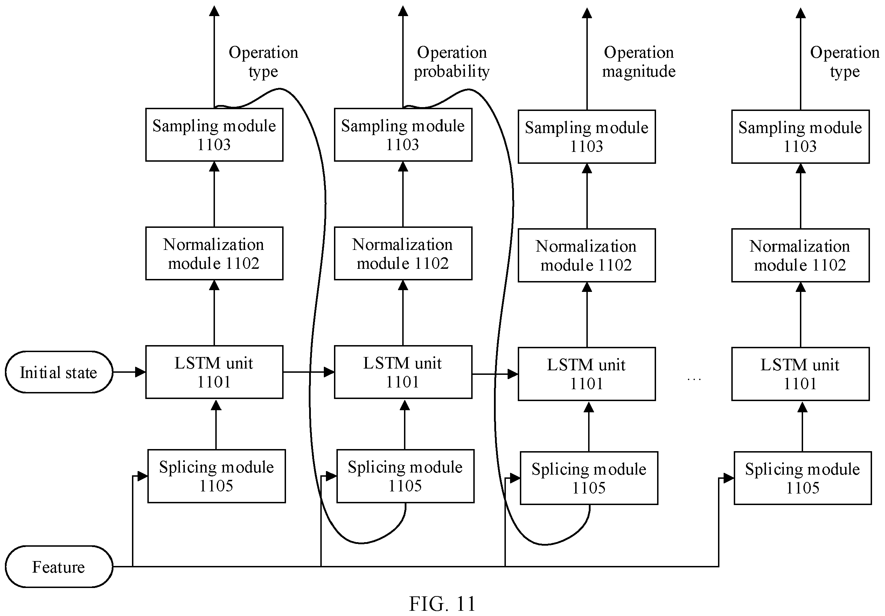

The obtaining module 510 is configured to perform S1110 in FIG. 11, to implement a corresponding function. The calculation module 520 is configured to perform S1120 in the method shown in FIG. 11, to implement a corresponding function.

When the data processing apparatus 500 is a software apparatus, the data processing apparatus 500 may be independently deployed on a computing device in any environment, for example, independently deployed on a computing device or independently deployed on a computing device in a data center. An example structure of the computing device is shown in FIG. 4. The communications interface 403 receives an original training set and a target neural network, the memory 404 stores executable code for implementing a function of each module in the data processing apparatus 500, and the processor 402 reads the executable code to implement the function of each module, and finally implement a function of the target neural network.

The data processing apparatus in this embodiment of this application may process data based on the target neural network trained by the training apparatus 200, so that processing performance can be improved. For example, when the target neural network is an image classification network, performance of the target neural network trained by the training apparatus 200 is higher. Therefore, a result of performing image classification by the execution apparatus according to the target neural network is more accurate.

FIG. 6 is a schematic flowchart of a neural network training method according to an embodiment of this application. The method includes S610 to S630.

S610: Generate an $i^{th}$ batch of policies according to an $(i-1)^{th}$ group of loss values, where the $(i-1)^{th}$ group of loss values are values output by a loss function after a target neural network is trained according to an $(i-1)^{th}$ batch of augmentation training sets, i is sequentially taken from 2 to N, and N is a preset value.

The $(i-1)^{th}$ group of loss values include one or more loss values, and the $i^{th}$ batch of policies include one or more policies. Generally, a quantity of loss values in the $(i-1)^{th}$ group of loss values is the same as a quantity of augmentation training sets in the $(i-1)^{th}$ batch of augmentation training sets, and the loss values in the $(i-1)^{th}$ group of loss values are in a one-to-one correspondence with the augmentation training sets in the $(i-1)^{th}$ batch of augmentation training sets, that is, a $j^{th}$ loss value in the $(i-1)^{th}$ group of loss values is a loss function value output after the target neural network is trained according to a corresponding augmentation training set in the $(i-1)^{th}$ batch of augmentation training sets, j is a positive integer less than or equal to M, and M is the quantity of loss values in the $(i-1)^{th}$ group of loss values. The quantity of augmentation training sets in the $(i-1)^{th}$ batch of augmentation training sets is generally the same as a quantity of policies in the $(i-1)^{th}$ batch of policies, and the augmentation training sets in the $(i-1)^{th}$ group of augmentation training sets are in a one-to-one correspondence with the policies in the $(i-1)^{th}$ batch of policies, that is, a $j^{th}$ augmentation training set in the $(i-1)^{th}$ group of augmentation training sets is a training set obtained by augmenting an original training set according to a corresponding policy in the $(i-1)^{th}$ batch of policies.

Generally, the $i^{th}$ batch of policies need to meet the following requirement: A loss function value output by performing inference on the $i^{th}$ batch of augmentation training sets according to the target neural network after the $i^{th}$ batch of augmentation training sets obtained by augmenting the original training set according to the $i^{th}$ batch of policies are input into the target neural network needs to be greater than a loss function value output by performing inference on the $(i-1)^{th}$ batch of augmentation training sets according to the target neural network after the $(i-1)^{th}$ batch of augmentation training sets are input to the target neural network.

The target neural network may also be referred to as a service implementation neural network, that is, a neural network that is actually used to implement a corresponding service after training ends. An example of the target neural network is a convolutional neural network. For example, when the target neural network is an image classification network, the target neural network is used to perform image classification on an edge device after being trained by using the method. For another example, when the target neural network is a data processing network of a sensor, the target neural network is used to perform person, building, road, or vehicle recognition on an edge device after being trained by using the method.

In some possible implementations, the $i^{th}$ batch of policies may be randomly initialized and generated, data augmentation is performed on the original training set according to the $i^{th}$ batch of policies, to obtain the $i^{th}$ batch of augmentation training sets, and the target neural network is trained according to the $i^{th}$ batch of augmentation training sets, to obtain the $i^{th}$ group of loss values. In some other possible implementations, the original training set may be first input into the target neural network for training, and the $i^{th}$ group of loss values are generated according to the training.

S620: Perform data augmentation on the original training set of the target neural network according to the $i^{th}$ batch of policies, to obtain an $i^{th}$ batch of augmentation training sets.

It may be understood that the original training set described herein is for the augmentation training set, that is, the original training set is a data set on which data augmentation is not performed according to a policy.

For example, when one policy includes five sub-policies, the data augmentation module 220 may be configured to: randomly select one sub-policy from the five sub-policies included in the policy, and augment data in the original training set according to information such as an operation type, a probability, and an intensity value in the sub-policy, to get an augmentation training set.

For example, when the training set includes a plurality of images, the data augmentation module 220 may be configured to: for each image in each batch of data in the training set, randomly select one sub-policy from five sub-policies, and perform data augmentation according to information such as an operation type, a probability, and an intensity value in the sub-policy, to obtain an augmentation training set, where the augmentation training set includes an augmentation image.

S630: Train the target neural network according to the $i^{th}$ batch of augmentation training sets, to obtain an $i^{th}$ group of loss values.

For an implementation of training the target neural network according to the augmentation training set, refer to an implementation of training a neural network according to a training set in the conventional technology.

The loss value output in S630 is used as the loss value in S610, S610 to S630 are repeatedly performed until a termination condition is met, and a neural network obtained by training the target neural network according to an $N^{th}$ batch of augmentation training sets is output. An example termination condition is that a quantity of training times of the target neural network reaches a preset maximum value, for example, N. Another example termination condition is that at least X different policies in a search space have been used to perform data augmentation on the original training set. It may be understood that the termination condition is not limited to the foregoing examples, and X is a positive integer.

According to the method in the embodiments of this application, the target neural network and a search policy are alternately trained, so that the generated policy can change with a status of the target neural network, and an augmentation training set obtained according to the policy can better match a training process of the target neural network. This greatly improves performance of the target neural network. In addition, the training apparatus can improve policy generation efficiency, and improve training efficiency of the target neural network.

According to the method in this embodiment of this application, the target neural network is trained in an adversarial manner, so that a weakness of the target neural network can be continuously discovered, a policy of higher quality can be generated according to the weakness, and data augmentation can be performed according to the policy to obtain data of higher quality. A target neural network of higher quality can be trained according to the data.

An implementation of the neural network training method in FIG. 6 is described below in more detail with reference to FIG. 7.

S710: Initially randomly generate an $i^{th}$ batch of policies, and initialize i as 0.

S720: i = i+1.

S730: Perform data augmentation on an original training set of a target neural network according to the $i^{th}$ batch of policies, to obtain an $i^{th}$ batch of augmentation training sets.

S740: Train the target neural network according to the $i^{th}$ batch of augmentation training sets, to obtain an $i^{th}$ group of loss values.

S750: Generate an $(i+1)^{th}$ batch of policies according to the $i^{th}$ group of loss values.

S760: Determine whether i is less than N, where N is a preset quantity of training times, that is, determine whether a termination condition is met, and if yes, perform S770, or otherwise, perform S720.

S770: Output the target neural network.

In some designs, generating a policy according to a loss value may include: generating the policy according to an augmentation policy network and the loss value. In this design, after the loss value output by the target neural network is input into the augmentation policy neural network, the augmentation policy neural network may be instructed to update a parameter, so that an inference loss value of the target neural network increases after an augmentation training set obtained by augmenting a policy generated by the augmentation policy neural network in an updated parameter state is input into the target neural network. The augmentation policy neural network may update the parameter according to feedback information output by the target neural network by using an existing augmentation learning algorithm-based method. The inference loss value of the target neural network is a loss function value obtained by performing inference on the augmentation training set by the target neural network.

An example of the augmentation policy neural network is a cyclic neural network. FIG. 8 is a schematic diagram of a structure of an augmentation policy neural network according to an embodiment of this application. As shown in FIG. 8, the augmentation policy neural network includes a long short-term memory (long short-term memory, LSTM) unit 801, a normalization module 802, and a sampling module 803. Each column represents an execution process of one time step, different columns represent different time steps, and columns from left to right are operations in time steps arranged in a chronological order.

The LSTM unit may also be referred to as an LSTM layer, the normalization module may also be referred to as a normalization (softmax) layer, and the sampling module may also be referred to as a sampling (sample) layer.

When the augmentation policy neural network is started, in a first time step, the LSTM unit 801 performs feature mapping according to a randomly initialized initial state 1, to obtain an M-dimensional eigenvector, where M is a length of an information set to which operation information output by the sampling module 803 in a current time step belongs. For example, when the sampling module 803 outputs an operation type in the first time step, if an operation type set includes 16 "operations", the LSTM unit 801 maps an initialized initial state to a 16-dimensional eigenvector. The normalization module 802 generates probability distribution of M pieces of operation information in the information set according to the M-dimensional eigenvector output by the LSTM unit 801. For example, when the information set includes 16 "operations", the normalization module 802 outputs probability distribution (PI, P2, ..., P16) of the 16 "operations". The sampling module 803 performs sampling according to the probability distribution output by the normalization module 802, to obtain one piece of operation information in the information set through sampling, for example, obtain one "operation" thereof through sampling according to the probability distribution of the 16 "operations".

In a second time step, the LSTM unit 801 maps the operation information output by the sampling module 803 in the previous time step to an M-dimensional vector. In this case, M is a length of an information set to which operation information output by the sampling module 803 in the second time step belongs. For example, the operation type output by the sampling module 803 in the first time step is "rotation", and when the sampling module 803 outputs an operation probability in the second time step, if an operation probability set includes 11 "probabilities", the LSTM unit 801 obtains an 11-dimensional eigenvector through "rotation" mapping. After inputting the 11-dimensional eigenvector, the normalization module 802 generates probability distribution of probability values of the "operations" according to the 11-dimensional eigenvector. The sampling module 803 performs sampling according to the probability distribution to obtain one probability value thereof, and outputs the value.

In a third time step, the LSTM unit 801 maps the operation information output by the sampling module 803 in the second time step to an M-dimensional vector. In this case, M is a length of an information set to which operation information output by the sampling module 803 in the third time step belongs. For example, the operation probability output by the sampling module 803 in the second time step is "0.9", and when the sampling module 803 outputs an operation magnitude in the third time step, if an operation magnitude set includes 10 "magnitudes", the LSTM unit 801 obtains a 10-dimensional eigenvector through "0.9" mapping. After inputting the 10-dimensional eigenvector, the normalization module 802 generates probability distribution of magnitude values of the "operations" according to the high-dimensional eigenvector. The sampling module 803 performs sampling according to the probability distribution to obtain one magnitude value thereof, and outputs the value. In this implementation, because steps in a current time step refer to operation information output in a previous time step, performance of a generated policy can be improved.

The three outputs of the sampling unit 803 in the three time steps constitute one "operation". The augmentation policy neural network continues to cyclically perform the steps in the foregoing time steps, and one "operation" may be obtained in every three time steps. A plurality of operations form one sub-policy, and a plurality of sub-policies form one policy.

It may be understood that the foregoing time sequence of the sampling "operation", the "probability", and the "magnitude" is merely an example, and an operation type in one sub-policy and a probability and a magnitude of the operation type may be obtained through sampling in another time sequence.

Optionally, the augmentation policy neural network may output a plurality of policies, and the plurality of policies are referred to as a batch of policies. In this case, data augmentation is performed on an original training set according to the batch of policies, to obtain a plurality of augmentation training sets. The plurality of augmentation training sets are in a one-to-one correspondence with the plurality of policies, and each augmentation training set is obtained by performing data augmentation on the original training set according to a corresponding policy. In addition, the target neural network is trained by using the plurality of augmentation training sets to obtain a plurality of loss values. The plurality of loss values are referred to as a group of loss values. The plurality of loss values are in a one-to-one correspondence with the plurality of augmentation training sets, and each loss value is obtained by training the target neural network according to a corresponding augmentation training set. The plurality of loss values are synchronously input into the augmentation policy neural network, to indicate the augmentation policy neural network to update a parameter, and the augmentation policy neural network starts to generate a policy after updating the parameter. In this manner, because the plurality of loss values may be synchronously input into the augmentation policy neural network, efficiency of generating a harder policy according to the augmentation policy network can be improved, and efficiency of training a target neural network with better performance can be improved.

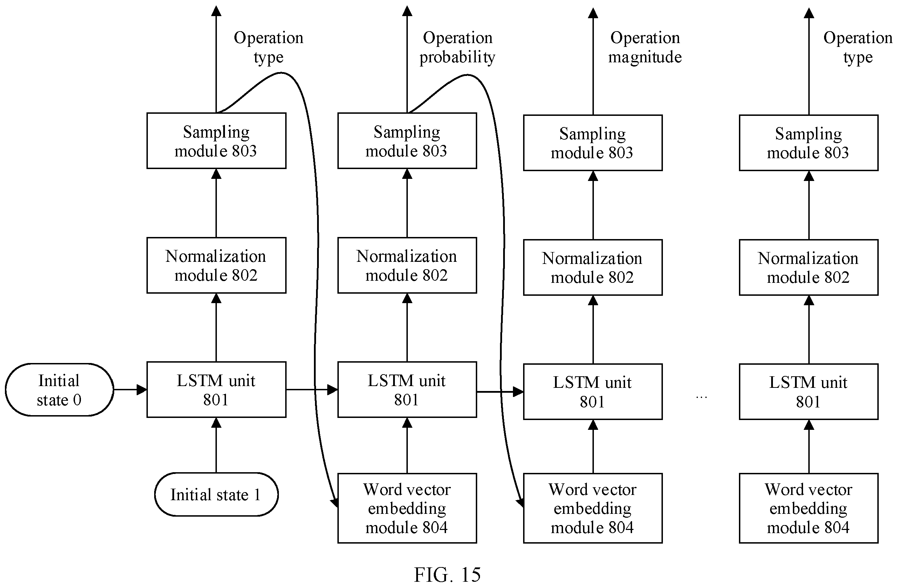

If a one-hot (one-hot) vector is output in each time step, as shown in FIG. 15, the augmentation policy neural network may further include a word vector embedding module 804, and the word vector embedding module 804 is configured to map, to a vector in a real number field, the one-hot vector of the operation information output by the sampling module 803 in the previous time step. In this implementation, the long short-term memory unit is specifically configured to map the vector output by the word vector embedding module 804 to the M-dimensional vector. The word vector embedding module may also be referred to as an embedding (embedding) layer.

For example, in the first time step, the sampling module 803 outputs a third operation type "rotation" in the operation type set, and an example of a one-hot vector of the operation type is [0010000000000000]. In the second time step, the word vector embedding module 804 may use the 16-dimensional one-hot vector as a 3-dimensional vector [0.2, 0.9, 0.5] in a real number field. The long short-term memory unit 801 obtains probability distribution of 11-dimensional operation probabilities according to the vector in the real number field through mapping. In the second time step, the sampling module 803 outputs a second probability "0.8" in the operation probability set, and an example of a one-hot vector of the operation probability is [01000000000]. In the third time step, the word vector embedding module 804 may use the 11-dimensional one-hot vector as a 4-dimensional vector [0.22, 0.54, 0.42, 0.91] in the real number field. The long short-term memory unit 801 obtains probability distribution of 10-dimensional operation magnitudes according to the vector in the real number field through mapping. This manner reduces an amount of calculation and increases correlation between outputs in two time steps.

In some designs, as shown in FIG. 9, the training method in this embodiment of this application may include S910, and correspondingly, S610 includes S920.

S910: Perform inference on the original training set by using the target neural network trained according to the $(i-1)^{th}$ batch of augmentation training sets, to obtain an $i^{th}$ batch of features of data in the original training set in the target neural network.

For example, when the target neural network is an image classification network, the target neural network performs inference to output a feature map extracted from one or more layers.

It may be understood that, that the target neural network performs inference on the original training set means that after data in the original training set is input into the target neural network, the target neural network outputs information such as a loss function value and a feature, and does not update a parameter in the target neural network.

When i is 1, the $i^{th}$ batch of features are features obtained by inputting the original training set into the target neural network for inference.

S920: Generate the $i^{th}$ batch of policies according to the $(i-1)^{th}$ group of loss values and the $i^{th}$ batch of features.

For example, the $i^{th}$ batch of policies are generated according to the $(i-1)^{th}$ group of loss values, the $i^{th}$ batch of features, and an augmentation policy neural network. After the $(i-1)^{th}$ group of loss values are input into the augmentation policy neural network, the augmentation policy neural network is instructed to update a parameter. After an augmentation training set corresponding to a policy generated by the augmentation policy neural network after the parameter is updated is used to infer the target neural network, a loss value of the target neural network needs to be greater than a previous loss value.

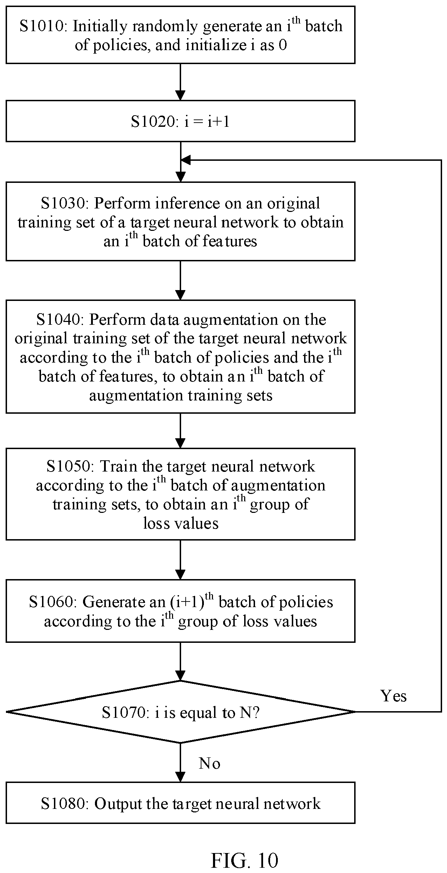

For the training method shown in FIG. 9, FIG. 10 is a schematic flowchart of a more detailed training method according to an embodiment of this application.

S1010: Initially randomly generate an $i^{th}$ batch of policies, and initialize i as 0.

S1020: i = i+1.

S1030: Perform inference on an original training set of a target neural network to obtain an $i^{th}$ batch of features.

S1040: Perform data augmentation on the original training set of the target neural network according to the $i^{th}$ batch of policies, to obtain an $i^{th}$ batch of augmentation training sets.

S1050: Train the target neural network according to the $i^{th}$ batch of augmentation training sets, to obtain an $i^{th}$ group of loss values.

S1060: Generate an $(i+1)^{th}$ batch of policies according to the $i^{th}$ group of loss values.

S1070: Determine whether i is less than N, where N is a preset quantity of training times, that is, determine whether a termination condition is met, and if yes, perform S 1080, or otherwise, perform S1020.

S1080: Output the target neural network.

For the training method shown in FIG. 9 or FIG. 10, FIG. 11 is a schematic diagram of a structure of an augmentation policy neural network according to an embodiment of this application. As shown in FIG. 11, the augmentation policy neural network includes an LSTM unit 1101, a normalization module 1102, a sampling module 1103, and a splicing module 1105. The splicing module may also be referred to as a concat (concat) layer.

An execution procedure of the augmentation policy neural network shown in FIG. 11 is similar to that of the augmentation policy neural network shown in FIG. 8, and a difference lies in that the splicing module is configured to splice, into a vector, a feature obtained by performing inference on the original training set and operation information output by the sampling module 1103 in a previous time. In addition, in each time step, the LSTM unit 1101 is configured to obtain an M-dimensional vector through mapping according to the vector output by the splicing module, where M is a length of an information set to which operation information output by the sampling module 1103 in a current time step belongs. In this implementation, a policy is generated with reference to a current state of the target neural network, so that the augmentation policy neural network can generate a harder policy, thereby improving quality of the target neural network.

For the training method shown in FIG. 9 or FIG. 10, FIG. 12 is a schematic diagram of a structure of an augmentation policy neural network according to an embodiment of this application.

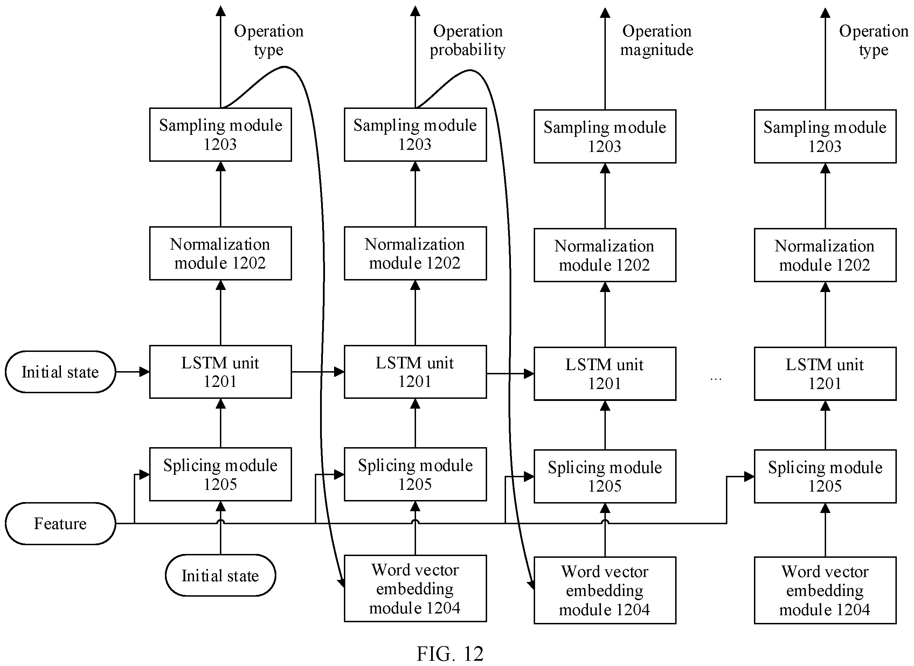

As shown in FIG. 12, the augmentation policy neural network includes an LSTM unit 1201, a normalization module 1202, a sampling module 1203, a word vector embedding module 1204, and a splicing module 1205.

An execution procedure of the augmentation policy neural network shown in FIG. 12 is similar to that of the augmentation policy neural network shown in FIG. 11. For a function of the word vector embedding module 1204, refer to the word vector embedding module 804.

It may be understood that the augmentation policy neural network shown in FIG. 8, FIG. 11, or FIG. 12 is merely an example. The augmentation policy neural network in the technical solutions of this application may further include more functional modules or units, and one unit or one module may also be referred to as one layer. For example, in some possible implementations, in the augmentation policy neural network, a hyperbolic tangent function may be further included between the LSTM unit and the normalization module, and is used to perform data range compression on an eigenvector on which LSTM mapping is performed, to prevent an overfitting phenomenon from occurring in the augmentation policy neural network too quickly.

In the training method in this application, optionally, a policy may be generated based on other information. For example, the $i^{th}$ batch of policies may be generated according to the $(i-1)^{th}$ group of loss values and an $(i-1)^{th}$ group of test precision values, where the $(i-1)^{th}$ group of test precision values are precision values obtained by through testing after the target neural network is trained according to the $(i-1)^{th}$ batch of augmentation training sets. The $(i-1)^{th}$ group of test precision values have a same function as the $(i-1)^{th}$ group of loss values, and are used to indicate the augmentation policy neural network to update a parameter.

In the training method in this application, optionally, the augmentation policy neural network may be instructed to update a parameter based on similarity between two adjacent batches of policies or similarity between policies generated in a previous time step.

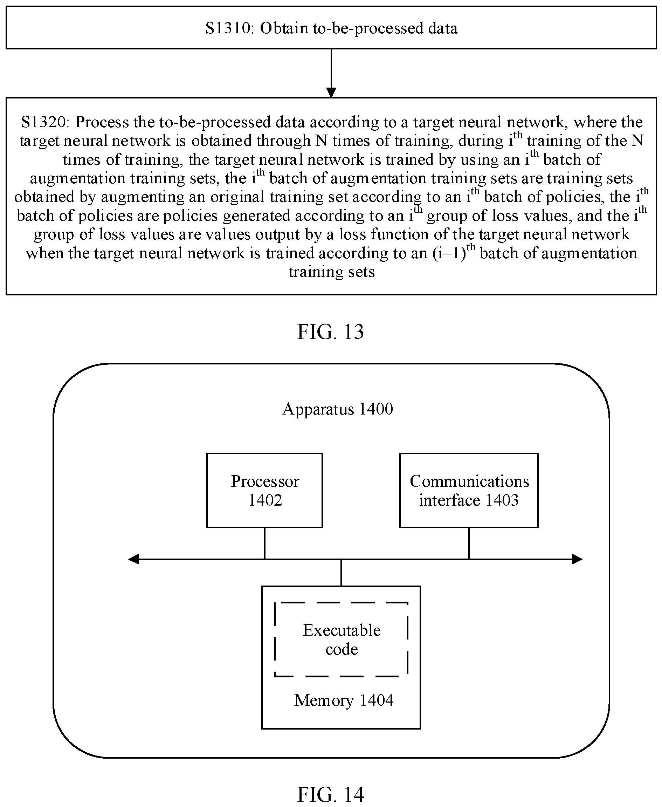

FIG. 13 is a schematic flowchart of a data processing method according to an embodiment of this application. The method may include S1310 and S1320.

S1310: Obtain to-be-processed data, for example, obtain a to-be-processed image, and further, obtain a to-be-classified image or a to-be-recognized image.

S1320: Process the to-be-processed data according to a target neural network. The target neural network is obtained through N times of training. During i<sup>th</sup> training of the N times of training, the target neural network is trained by using an i<sup>th</sup> batch of augmentation training sets. The i<sup>th</sup> batch of augmentation training sets are training sets obtained by augmenting an original training set according to an i<sup>th</sup> batch of policies. The i<sup>th</sup> batch of policies are policies generated according to an (i-1)<sup>th</sup> group of loss values. The (i-1)<sup>th</sup> group of loss values are values output by a loss function of the target neural network when the target neural network is trained according to an (i-1)<sup>th</sup> batch of augmentation training sets.

According to the method in this embodiment of this application, data may be processed according to the trained target neural network in the method shown in FIG. 6, so that processing performance can be improved. For example, when the target neural network is an image classification network, performance of the trained target neural network in the method shown in FIG. 6 is higher. Therefore, a result of performing image classification according to the target neural network is more accurate.

Optionally, the i<sup>th</sup> batch of policies are policies generated according to an (i-1)<sup>th</sup> group of loss values and an i<sup>th</sup> batch of features. That is, according to the method in this embodiment of this application, data may be processed according to the trained target neural network in the method shown in FIG. 9, so that processing performance can be improved. For example, when the target neural network is an image classification network, performance of the trained target neural network in the method shown in FIG. 9 is higher. Therefore, a result of performing image classification according to the target neural network is more accurate.

This application further provides an apparatus 1400 shown in FIG. 14. The apparatus 1400 includes a processor 1402, a communications interface 1403, and a memory 1404. An example of the apparatus 1400 is a chip. Another example of the apparatus 1400 is a computing device.

The processor 1402, the memory 1404, and the communications interface 1403 communicate with each other by using a bus. The processor 1402 may be a CPU. The memory 1404 may include a volatile memory, for example, a RAM. The memory 1404 may further include an 2NVM, for example, a 2ROM, a flash memory, an HDD, or an SSD. The memory 1404 stores executable code, and the processor 1402 reads the executable code in the memory 1404 to perform the corresponding method. The memory 1404 may further include another software module, for example, an operating system, for running a process. The operating system may be LINUX™, UNIX™, WINDOWS™, or the like.

For example, the executable code in the memory 1404 is used to implement the method shown in FIG. 6 or FIG. 9. The processor 1402 reads the executable code in the memory 1404 to perform the method shown in FIG. 6 or FIG. 9. For another example, the executable code in the memory 1404 is used to implement the method shown in FIG. 13. The processor 1402 reads the executable code in the memory 1404 to perform the method shown in FIG. 13.

A person of ordinary skill in the art may be aware that units, algorithms, and steps in the examples described with reference to the embodiments disclosed in this application can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one location, or may be distributed on a plurality of network units. A part or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A neural network training method, comprising:

   generating an $i^{th}$ batch of policies according to an $(i-1)^{th}$ group of loss values, wherein the $(i-1)^{th}$ group of loss values are values output by a loss function after a target neural network is trained according to an $(i-1)^{th}$ batch of augmentation training sets, i is sequentially taken from 2 to N, and N is a preset positive integer;
   performing data augmentation on an original training set of the target neural network according to the $i^{th}$ batch of policies, to obtain an $i^{th}$ batch of augmentation training sets;
   training the target neural network according to the $i^{th}$ batch of augmentation training sets, to obtain an $i^{th}$ group of loss values; and
   outputting a neural network obtained by training the target neural network according to an $N^{th}$ batch of augmentation training sets.

2. The method according to claim 1, wherein the generating an $i^{th}$ batch of policies according to an $(i-1)^{th}$ group of loss values comprises:
   generating the $i^{th}$ batch of policies according to an augmentation policy neural network and the $(i-1)^{th}$ group of loss values, wherein the $(i-1)^{th}$ group of loss values are used to indicate the augmentation policy neural network to update a parameter according to a machine learning method, and the augmentation policy neural network comprises a long short-term memory unit, a normalization module, and a sampling module; the long short-term memory unit is configured to obtain an M-dimensional vector through mapping according to operation information output by the sampling module in a previous time step, wherein M is a length of an information set to which operation information output by the sampling module in a current time step belongs; the normalization module is configured to generate probability distribution of M pieces of operation information in the information set according to the M-dimensional vector output by the long short-term memory unit, wherein the information set is an operation type set, an operation probability set, or an operation magnitude set; and the sampling module is configured to output one of the M pieces of operation information through sampling according to the probability distribution.

3. The method according to claim 2, wherein the sampling module outputs a one-hot vector of the operation information in the previous time step;

   the augmentation policy neural network further comprises a word vector embedding module, and the word vector embedding module is configured to map, to a vector in a real number field, the one-hot vector of the operation information output by the sampling module in the previous time step; and
   the long short-term memory unit is specifically configured to obtain the M-dimensional vector through mapping according to the vector output by the word vector embedding module.

4. The method according to claim 1, wherein the method further comprises:

   performing inference on the original training set by using the target neural network trained according to the $(i-1)^{th}$ batch of augmentation training sets, to obtain an $i^{th}$ batch of features of data in the original training set in the target neural network; and
   the generating an $i^{th}$ batch of policies according to an $(i-1)^{th}$ group of loss values comprises:
   generating the $i^{th}$ batch of policies according to the $(i-1)^{th}$ group of loss values and the $i^{th}$ batch of features.

5. The method according to claim 4, wherein the generating the $i^{th}$ batch of policies according to the $(i-1)^{th}$ group of loss values and the $i^{th}$ batch of features comprises:
   generating the $i^{th}$ batch of policies according to an augmentation policy neural network, the $i^{th}$ batch of features, and the $(i-1)^{th}$ group of loss values, wherein the $(i-1)^{th}$ group of loss values and the $i^{th}$ batch of features are used to indicate the augmentation policy neural network to update a parameter according to a machine learning method, and the augmentation policy neural network comprises a long short-term memory unit, a normalization module, a sampling module, and a splicing module; the splicing module is configured to splice, into a vector, the $i^{th}$ batch of features and operation information output by the sampling module in a previous time step; the long short-term memory unit is configured to obtain an M-dimensional vector through mapping according to the vector output by the splicing module, wherein M is a length of an information set to which operation information output by the sampling module in a current time step belongs; the normalization module is configured to generate probability distribution of M pieces of operation information in the information set according to the M-dimensional vector output by the long short-term memory unit, wherein the information set is an operation type set, an operation probability set, or an operation magnitude set; and the sampling module is configured to output one of the M pieces of operation information through sampling according to the probability distribution.

6. The method according to claim 5, wherein the sampling module outputs a one-hot vector of the operation information in the previous time step;

the augmentation policy neural network further comprises a word vector embedding module, and the word vector embedding module is configured to map, to a vector in a real number field, the one-hot vector of the operation information output by the sampling module in the previous time step; and
the long short-term memory unit is specifically configured to map, to the M-dimensional vector, the vector output by the word vector embedding module.

7. A data processing method, comprising:

obtaining to-be-processed data; and
processing the to-be-processed data according to a target neural network, wherein the target neural network is obtained through N times of training; during $i^{th}$ training of the N times of training, the target neural network is trained by using an $i^{th}$ batch of augmentation training sets; the $i^{th}$ batch of augmentation training sets are training sets obtained by augmenting an original training set according to an $i^{th}$ batch of policies; the $i^{th}$ batch of policies are policies generated according to an $(i-1)^{th}$ group of loss values; the $(i-1)^{th}$ group of loss values are values output by a loss function of the target neural network when the target neural network is trained according to an $(i-1)^{th}$ batch of augmentation training sets, i is sequentially taken from 2 to N, and N is a preset positive integer.

8. The method according to claim 7, wherein the $i^{th}$ batch of policies are generated according to an augmentation policy neural network and the $(i-1)^{th}$ group of loss values, wherein the $(i-1)^{th}$ group of loss values are used to indicate the augmentation policy neural network to update a parameter according to a machine learning method, and the augmentation policy neural network comprises a long short-term memory unit, a normalization module, and a sampling module; the long short-term memory unit is configured to map operation information output by the sampling module in a previous time step to an M-dimensional vector, wherein M is a length of an information set to which operation information output by the sampling module in a current time step belongs; the normalization module is configured to generate probability distribution of M pieces of operation information in the information set according to the M-dimensional vector output by the long short-term memory unit, wherein the information set is an operation type set, an operation probability set, or an operation magnitude set; and the sampling module is configured to output one of the M pieces of operation information through sampling according to the probability distribution.

9. The method according to claim 8, wherein the sampling module outputs a one-hot vector of the operation information in the previous time step;

the augmentation policy neural network further comprises a word vector embedding module, and the word vector embedding module is configured to map, to a vector in a real number field, the one-hot vector of the operation information output by the sampling module in the previous time step; and
the long short-term memory unit is specifically configured to map, to the M-dimensional vector, the vector output by the word vector embedding module.

10. The method according to claim 7, wherein the $i^{th}$ batch of policies are generated according to the $(i-1)^{th}$ group of loss values and the $i^{th}$ batch of features, and the $i^{th}$ batch of features are obtained by performing inference on the original training set by using the target neural network trained according to the $(i-1)^{th}$ batch of augmentation training sets.

**11.** The method according to claim 10, wherein the $i^{th}$ batch of policies are generated according to an augmentation policy neural network, the $i^{th}$ batch of features, and the $(i-1)^{th}$ group of loss values, wherein the $(i-1)^{th}$ group of loss values and the $i^{th}$ batch of features are used to indicate the augmentation policy neural network to update a parameter according to a machine learning method, and the augmentation policy neural network comprises a long short-term memory unit, a normalization module, a sampling module, and a splicing module; the splicing module is configured to splice, into a vector, the $i^{th}$ batch of features and operation information output by the sampling module in a previous time step; the long short-term memory unit is configured to obtain an M-dimensional vector through mapping according to the vector output by the splicing module, wherein M is a length of an information set to which operation information output by the sampling module in a current time step belongs; the normalization module is configured to generate probability distribution of M pieces of operation information in the information set according to the M-dimensional vector output by the long short-term memory unit, wherein the information set is an operation type set, an operation probability set, or an operation magnitude set; and the sampling module is configured to output one of the M pieces of operation information through sampling according to the probability distribution.

**12.** The method according to claim 11, wherein the sampling module outputs a one-hot vector of the operation information in the previous time step;

the augmentation policy neural network further comprises a word vector embedding module and a splicing module, and the word vector embedding module is configured to map, to a vector in a real number field, the one-hot vector of the operation information output by the sampling module in the previous time step; and the long short-term memory unit is specifically configured to map, to the M-dimensional vector, the vector output by the word vector embedding module.

**13.** A neural network training apparatus, comprising:

a memory, configured to store a program; and
a processor, configured to execute the program stored in the memory, wherein when the program stored in the memory is executed, the processor is configured to perform the method according to any one of claims 1 to 6.

**14.** A data processing apparatus, comprising:

a memory, configured to store a program; and
a processor, configured to execute the program stored in the memory, wherein when the program stored in the memory is executed, the processor is configured to perform the method according to any one of claims 7 to 12.

**15.** A computer-readable storage medium, wherein the computer-readable storage medium stores instructions executed by a computing device, and the instructions are used to implement the method according to any one of claims 1 to 6.

**16.** A computer-readable storage medium, wherein the computer-readable storage medium stores instructions executed by a computing device, and the instructions are used to implement the method according to any one of claims 7 to 12.

```
┌─────────────────────┐
│  Data collection    │                        System architecture 100
│    device 160       │                        ─────────────────────────
└─────────────────────┘
   Data
   flow
        ┌────────────┐        ┌──────────────┐
        │  Database  │────────│   Training   │
        │    130     │        │ apparatus 120│
        └────────────┘        └──────────────┘
   Data
   flow
                        ┌────────────────────────────────────────────┐
                        │                  Data processing           │
                        │                   apparatus 110            │
              ┌─────┐   │   ┌──────────────────────────────────┐     │
    Input     │     │   │   │   Target model/Rule              │     │
    data      │ I/O │   │   │        101                       │     │
  ──────────  │inter│   │   └──────────────────────────────────┘     │      ┌──────────────┐
  ┌───────┐   │face │   │        Calculation module 111              │◄────►│ Data storage │
  │Client │   │ 112 │   │   ┌──────────────────────────────────┐     │      │  system 150  │
  │device │   │     │   │   │   Obtaining module               │     │      └──────────────┘
  │ 140   │   │     │   │   │        113                       │     │
  └───────┘   │     │   │   └──────────────────────────────────┘     │
    Output    │     │   └────────────────────────────────────────────┘
    result    └─────┘
```

FIG. 1

Training apparatus 200

Inference module
240

Policy search
module 210

Data augmentation
module 220

Training module
230

FIG. 2

Cloud data center

Training apparatus

Cloud service platform

Cloud service for training a neural network

Cloud environment

Purchase the cloud service

Provide the cloud service for training a neural network

User

FIG. 3

FIG. 4

FIG. 5

S610: Generate an $i^{th}$ batch of policies according to an $(i-1)^{th}$ group of loss values, where the $(i-1)^{th}$ group of loss values are values output by a loss function after a target neural network is trained according to an $(i-1)^{th}$ batch of augmentation training sets, i is sequentially taken from 2 to N, and N is a preset value

S620: Perform data augmentation on an original training set of the target neural network according to the $i^{th}$ batch of policies, to obtain an $i^{th}$ batch of augmentation training sets

S630: Train the target neural network according to the $i^{th}$ batch of augmentation training sets, to obtain an $i^{th}$ group of loss values

FIG. 6

S710: Initially randomly generate an $i^{th}$ batch of policies, and initialize i as 0

S720: i = i+1

S730: Perform data augmentation on an original training set of a target neural network according to the $i^{th}$ batch of policies, to obtain an $i^{th}$ batch of augmentation training sets

S740: Train the target neural network according to the $i^{th}$ batch of augmentation training sets, to obtain an $i^{th}$ group of loss values.

S750: Generate an $(i+1)^{th}$ batch of policies according to the $i^{th}$ group of loss values

S760: i is equal to N?

Yes

No

S770: Output the target neural network

FIG. 7

EP 4 030 348 A1

FIG. 8

S910: Perform inference on an original training set by using a neural network trained according to an $(i-1)^{th}$ batch of augmentation training sets, to obtain an $i^{th}$ batch of features of data in the original training set in the target neural network, where i is sequentially taken from 2 to N, and N is a preset value

S920: Generate an $i^{th}$ batch of policies according to an $(i-1)^{th}$ group of loss values and the $i^{th}$ batch of features, where the $(i-1)^{th}$ group of loss values are values output by a loss function after the target neural network is trained according to the $(i-1)^{th}$ batch of augmentation training sets

S620: Perform data augmentation on the original training set of the target neural network according to the $i^{th}$ batch of policies, to obtain an $i^{th}$ batch of augmentation training sets

S630: Train the target neural network according to the $i^{th}$ batch of augmentation training sets, to obtain an $i^{th}$ group of loss values

FIG. 9

S1010: Initially randomly generate an $i^{th}$ batch of policies, and initialize i as 0

↓

S1020: i = i+1

↓

S1030: Perform inference on an original training set of a target neural network to obtain an $i^{th}$ batch of features

↓

S1040: Perform data augmentation on the original training set of the target neural network according to the $i^{th}$ batch of policies and the $i^{th}$ batch of features, to obtain an $i^{th}$ batch of augmentation training sets

↓

S1050: Train the target neural network according to the $i^{th}$ batch of augmentation training sets, to obtain an $i^{th}$ group of loss values

↓

S1060: Generate an $(i+1)^{th}$ batch of policies according to the $i^{th}$ group of loss values

↓

S1070: i is equal to N?

Yes

No

↓

S1080: Output the target neural network

FIG. 10

EP 4 030 348 A1

Operation type | Operation probability | Operation magnitude | Operation type

| Sampling module 1103 | Sampling module 1103 | Sampling module 1103 | Sampling module 1103 |

| Normalization module 1102 | Normalization module 1102 | Normalization module 1102 | Normalization module 1102 |

Initial state

| LSTM unit 1101 | LSTM unit 1101 | LSTM unit 1101 | ... | LSTM unit 1101 |

| Splicing module 1105 | Splicing module 1105 | Splicing module 1105 | Splicing module 1105 |

Feature

FIG. 11

FIG. 12

| S1310: Obtain to-be-processed data |
| --- |

| S1320: Process the to-be-processed data according to a target neural network, where the target neural network is obtained through N times of training, during $i^{th}$ training of the N times of training, the target neural network is trained by using an $i^{th}$ batch of augmentation training sets, the $i^{th}$ batch of augmentation training sets are training sets obtained by augmenting an original training set according to an $i^{th}$ batch of policies, the $i^{th}$ batch of policies are policies generated according to an $i^{th}$ group of loss values, and the $i^{th}$ group of loss values are values output by a loss function of the target neural network when the target neural network is trained according to an $(i-1)^{th}$ batch of augmentation training sets |
| --- |

FIG. 13

Apparatus 1400

| Processor 1402 | Communications interface 1403 |

| Executable code |
| Memory 1404 |

FIG. 14

FIG. 15

## INTERNATIONAL SEARCH REPORT

| International application No. |
| --- |
| **PCT/CN2020/101009** |

| A. | CLASSIFICATION OF SUBJECT MATTER |
| --- | --- |

G06N 3/04(2006.01)i

According to International Patent Classification (IPC) or to both national classification and IPC

| B. | FIELDS SEARCHED |
| --- | --- |

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 神经网络, 训练, 样本, 数据增强, 扩充, 扩大, 拓展, 训练集, 数量, 损失值, 特征, 生成, 策略, 损失函数, 交替, 对抗, 发现, 弱点, 增强策略神经网络, 机器学习, 更新, 参数, 长短时间记忆, 归一化, 采样, 迭代, 终止, 反向, 向前, 传播, neural network, train, sample, data enhancement, augmentation, expansion, training set, quantity, loss value, feature, generation, policy, loss function, alternation, confrontation, discovery, weakness, machine learning, update, parameter, long and short term memory, normalization, iteration, termination, reversal, forward, propagation, GAN

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 108460464 A (ZTE CORPORATION) 28 August 2018 (2018-08-28) description, paragraphs [0051]-[0111], and figures 1-2 | 1-16 |
| A | CN 109359815 A (NORTH CHINA ELECTRIC POWER UNIVERSITY) 19 February 2019 (2019-02-19) entire document | 1-16 |
| A | CN 108427941 A (BAIDU ONLINE NETWORK TECHNOLOGY (BEIJING) CO., LTD.) 21 August 2018 (2018-08-21) entire document | 1-16 |
| A | CN 110110689 A (NORTHEASTERN UNIVERSITY) 09 August 2019 (2019-08-09) entire document | 1-16 |
| A | KR 101947650 B1 (AGENCY FOR DEFENSE DEVELOPMENT) 20 May 2019 (2019-05-20) entire document | 1-16 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 September 2020** | **12 October 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/101009**

| Patent document cited in search report | | | Publication date (day/month/year) | Patent family member(s) | | | Publication date (day/month/year) |
|---|---|---|---|---|---|---|---|
| CN | 108460464 | A | 28 August 2018 | WO | 2018153201 | A1 | 30 August 2018 |
| CN | 109359815 | A | 19 February 2019 | None | | | |
| CN | 108427941 | A | 21 August 2018 | None | | | |
| CN | 110110689 | A | 09 August 2019 | None | | | |
| KR | 101947650 | B1 | 20 May 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910904970